# EUROPEAN PATENT APPLICATION

(11) **EP 4 494 866 A1**
(43) Date of publication of application: **22.01.2025**
(21) Application number: 23770286.5
(22) Date of filing: 21.02.2023
(51) Int. Cl.: B32B 27/28, B29C 55/04

(54) **UNIAXIALLY ORIENTED MULTILAYER STRUCTURE AND METHOD FOR MANUFACTURING SAME**

(30) Priority: 18.03.2022 JP 2022043586
(71) Applicant: Mitsubishi Chemical Corporation, Tokyo 100-8251 (JP)
(72) Inventor: YAMAMOTO, Nobuyuki, Tokyo 100-8251 (JP)
(74) Representative: Vossius & Partner Patentanwälte Rechtsanwälte mbB
(86) International application number: PCT/JP2023/006120
(87) International publication number: WO 2023/176327

(57) **Abstract**

A uniaxially stretched multilayer structure with excellent transparency is provided that is stretched in a uniaxial direction and has a resin composition (A) layer containing an ethylene-vinyl alcohol copolymer. A multilayer structure having layers stretched in a uniaxial direction includes a resin composition (A) layer containing an ethylene-vinyl alcohol copolymer. The ethylene-vinyl alcohol copolymer in the resin composition (A) layer has an ethylene unit content of less than 32 mol%. The resin composition (A) layer is provided in a layer other than an outermost layer of the multilayer structure.

## Description

### TECHNICAL FIELD

The present disclosure relates to a multilayer structure stretched in a uniaxial direction (which hereinafter may be referred to as "uniaxially stretched multilayer structure") with a resin composition (A) layer containing an ethylene-vinyl alcohol copolymer (which hereinafter may be referred to as "EVOH") with an ethylene unit content of less than 32 mol%, in which the resin composition (A) layer is provided in a layer other than an outermost layer.

### BACKGROUND ART

EVOH has an extremely strong intermolecular force because of hydrogen bonds between hydroxyl groups present in the polymer side chains. EVOH therefore has a high crystallinity and a high intermolecular force even in the amorphous portions. Thus, a film using EVOH is less likely to transmit gas molecules and exhibits excellent gas barrier properties. Because of this, EVOH has been used as a gas barrier layer for imparting gas barrier properties to multilayer structures such as films and containers in a wide variety of fields including food packaging.

For example, PTL 1 aims to provide a laminate resin uniaxially stretched film excellent in gas barrier properties and stretchability, and describes a laminate resin uniaxially stretched film that has a resin layer (α) of an ethylene-α-olefin copolymer and polyethylene, and a resin layer (β) selected from polyamide resin, aromatic polyester resin, polyvinyl alcohol, and EVOH. In Example of PTL 1, a uniaxially stretched film is disclosed in which a gas barrier layer of EVOH with an ethylene content of 32 mol% is provided in an intermediate layer (fourth layer).

### RELATED ART DOCUMENT

### PATENT DOCUMENT

PTL 1: JP-A-2006-150624

### SUMMARY

### PROBLEMS TO BE SOLVED BY THE DISCLOSURE

As described in PTL 1, a uniaxially stretched multilayer structure having a resin composition layer containing EVOH in an intermediate layer is known. However, there is room for improvement in transparency of the multilayer structure.

The present disclosure is made in view of such a problem and provides a uniaxially stretched multilayer structure having a resin composition layer containing EVOH with excellent transparency.

### MEANS FOR SOLVING THE PROBLEMS

The inventor of the present disclosure has conducted elaborate studies in order to solve the above problem and found that the transparency of a uniaxially stretched multilayer structure can be improved by using EVOH with an ethylene unit content of less than 32 mol% and providing a layer of a resin composition containing such EVOH in a layer other than an outermost layer of the uniaxially stretched multilayer structure.

Specifically, the present disclosure provides the following [1] to [8].
[1] A multilayer structure having layers stretched in a uniaxial direction, comprising a resin composition (A) layer containing an ethylene-vinyl alcohol copolymer, wherein the ethylene-vinyl alcohol copolymer in the resin composition (A) layer has an ethylene unit content of less than 32 mol%, and the resin composition (A) layer is provided in a layer other than an outermost layer of the multilayer structure.
[2] The multilayer structure according to [1], wherein the multilayer structure is stretched in a uniaxial direction 3 to 12 times.
[3] The multilayer structure according to [1] or [2], wherein the resin composition (A) contains an ethylene-vinyl alcohol copolymer as a main component.
[4] The multilayer structure according to any one of [1] to [3], further comprising a thermoplastic resin (B) layer.
[5] The multilayer structure according to any one of [1] to [4], further comprising an adhesive resin (C) layer.
[6] The multilayer structure according to any one of [1] to [5], wherein the multilayer structure does not include a layer containing polyamide as a main component.
[7] A method of producing a multilayer structure according to any one of [1] to [6], comprising:
   step (1): melting and extruding a resin composition (A) and a thermoplastic resin (B) to mold a multilayer structure intermediate in which the resin composition (A) layer is provided in a layer other than an outermost layer; and
   step (2): stretching the multilayer structure intermediate in a uniaxial direction to produce a uniaxially stretched multilayer structure.
[8] The method of producing a multilayer structure according to [7], wherein the step (1) is a step of melting and extruding a resin composition (A), a thermoplastic resin (B), and an adhesive resin (C) to mold the multilayer structure intermediate.

### EFFECTS OF THE DISCLOSURE

According to the present disclosure, a uniaxially stretched multilayer structure with excellent transparency can be provided by using EVOH with an ethylene unit content of less than 32 mol% as EVOH and providing a layer of a resin composition containing such EVOH in a layer other than an outermost layer of the multilayer structure.

It is commonly known that the lower the ethylene unit content of EVOH, the lower the stretchability. Therefore, the use of EVOH with a low ethylene unit content in a stretched film tends to be avoided. In Example of the above PTL 1, EVOH with an ethylene unit content of 32 mol% is used. The inventor of the present disclosure has found that when EVOH with an ethylene unit content of less than 32 mol% is used in a uniaxially stretched multilayer structure, unexpectedly, the reduction of stretchability does not occur and the transparency of the multilayer structure is more excellent, as compared to EVOH with a high ethylene unit content, specifically, with an ethylene unit content of 32 mol% or more.

### EMBODIMENTS OF THE DISCLOSURE

Although embodiments of the present disclosure will be described in detail below, the present disclosure is not limited to the following description and can be implemented with any modifications without departing from the spirit of the present disclosure. In the present description, when numerical values or physical property values are represented using "to" before and after such values, the values before and after "to" are intended to be encompassed. Further, the expression "X or more" (X is a given number) or "Y or less" (Y is a given number) is intended to encompass the meaning "preferably more than X" or "preferably less than Y."

In the following, a monomer unit contained in a copolymer resin may be simply referred to as "unit." For example, a monomer unit based on ethylene may be referred to as "ethylene unit."

A uniaxially stretched multilayer structure of the present disclosure has a resin composition (A) layer containing EVOH with an ethylene unit content of less than 32 mol%, and the resin composition (A) layer is provided in a layer other than an outermost layer of the uniaxially stretched multilayer structure.

Each constitution will be described below.

### [Resin Composition (A) Layer]

The resin composition (A) layer contains EVOH with an ethylene unit content of less than 32 mol% and is provided in a layer other than an outermost layer of the uniaxially stretched multilayer structure. More specifically, other layers included in the uniaxially stretched multilayer structure are adjacent to both surfaces in the thickness direction of the resin composition (A) layer. The uniaxially stretched multilayer structure of the present disclosure includes the resin composition (A) layer and thereby has excellent transparency. It is noted that a plurality of resin composition (A) layers may be provided. In this case, all of the resin composition (A) layers are provided in layers other than an outermost layer of the uniaxially stretched multilayer structure.

The content of EVOH in the resin composition (A) layer is not limited, but it is preferable that EVOH is a main component (that is, the content of EVOH in the resin composition (A) layer is 50 mass% or more). The content of EVOH is more preferably 60 mass% or more, even more preferably 70 mass% or more, and particularly preferably 80 mass% or more, 90 mass% or more, 95 mass% or more, and 100 mass%.

The resin composition (A) layer may contain a component other than EVOH in a range that does not impair the effects of the present disclosure, typically in the range of 5 mass% or less. Examples of other components that may be contained include antiblocking agent, processing aid, resins other than EVOH, carboxylic acid compound, phosphoric acid compound, boron compound, metal salt, stabilizer, antioxidant, UV absorber, plasticizer, antistatic agent, lubricant, colorant, filler, surfactant, drying agent, crosslinker, and reinforcing agent such as a variety of fibers.

The thickness of the resin composition (A) layer is not limited but is preferably 0.5 µm or more, more preferably 0.8 µm or more, and may be 1 µm or more. When the thickness of the resin composition (A) layer is 0.5 µm or more, gas barrier properties tend to be improved. Further, the thickness of the resin composition (A) layer is preferably 20 µm or less, more preferably 10 µm or less, and may be 5 µm or less. When the thickness of the resin composition (A) layer is 20 µm or less, the appearance properties (film surface) after stretching tend to be good. It is noted that the above preferable thickness of the resin composition (A) layer means the thickness after stretching. The ratio of the thickness of the resin composition (A) layer to the total thickness of all layers in the uniaxially stretched multilayer structure of the present disclosure is not limited but is preferably 30% or less, more preferably 20% or less, and may be 10% or less or 5% or less, in terms of industrial productivity and mechanical properties.

### [EVOH]

The EVOH can be obtained by saponifying an ethylene-vinyl ester copolymer. A typical example of the vinyl ester is vinyl acetate, but other fatty acid vinyl esters (such as vinyl propionate and vinyl pivalate) can also be used. The ethylene-vinyl ester copolymer can be produced by any known polymerization method such as solution polymerization, suspension polymerization, or emulsion polymerization. The saponification of the ethylene-vinyl ester copolymer can also be performed by any known method.

The ethylene unit content of the EVOH used in the resin composition (A) layer, which is measured in conformity with ISO14663, is less than 32 mol%. When the ethylene unit content of the EVOH is less than 32 mol%, the transparency of the uniaxially stretched multilayer structure is improved. On the other hand, when the ethylene unit content of the EVOH is 32 mol% or more, the transparency of the uniaxially stretched multilayer structure is reduced. The ethylene unit content of the EVOH is preferably 30 mol% or less, more preferably 29 mol% or less, even more preferably 27 mol% or less, and particularly preferably 25 mol% or less. The lower limit of the ethylene unit content of the EVOH is usually 20 mol%.

The vinyl ester unit saponification degree of the EVOH, which is measured in conformity with JIS K6726 (where EVOH is a solution homogeneously dissolved in a water/methanol solvent), is preferably 80 mol% or more, even more preferably 90 mol% or more, more preferably 98 mol% or more, particularly preferably 99 mol% or more, and may be 100 mol%, in terms of barrier properties, thermal stability, and moisture resistance.

The melt flow rate (MFR) (at 210°C with a load of 2160 g) of the EVOH is usually 0.5 to 100 g110 minutes, preferably 1 to 50 g110 minutes, and particularly preferably 3 to 35 g/10 minutes. If this MFR is too high, film formability tends to be unstable. If it is too low, viscosity becomes too high and the melt extrusion tends to be difficult.

The EVOH may be copolymerized with a polymerizable monomer other than ethylene and vinyl ester in a range that does not impair the effects of the present disclosure, typically in the range of 5 mol% or less. Examples of such a polymerizable monomer include α-olefins such as propylene, isobutene, α-octene, α-dodecene, and α-octadecene, hydroxyl-containing α-olefins such as 3-buten-1-ol, 4-penten-1-ol, and 3-butene-1,2-diol, and derivatives including esterification products and acylation products of these hydroxyl-containing α-olefins; hydroxymethyl vinylidene diacetates such as 1,3-diacetoxy-2-methylenepropane, 1,3-dipropionyloxy-2-methylenepropane, and 1,3-dibutyronyloxy-2-methylenepropane; unsaturated carboxylic acids, and salts, partial alkyl esters, full alkyl esters, nitriles, amides, and anhydrides thereof; unsaturated sulfonic acids and salts thereof; vinylsilane compounds; vinyl chloride; and styrene. These can be used alone or in combination of two or more.

Furthermore, "post-modified" EVOH such as urethanized EVOH, acetalized EVOH, cyanoethylated EVOH, and oxyalkylenated EVOH may be used as the EVOH.

A single kind of EVOH may be used, or two or more kinds with different kinds of vinyl esters or different ethylene unit contents or physical properties may be used in combination.

### [Thermoplastic Resin (B) Layer)

The uniaxially stretched multilayer structure of the present disclosure may have a thermoplastic resin (B) layer. When the thermoplastic resin (B) layer is provided, the mechanical strength and the barrier properties against water vapor of the uniaxially stretched multilayer structure tend to be further increased. Further, the properties such as heat sealability and mechanical strength can be imparted according to the kind of thermoplastic resin that constitutes the thermoplastic resin (B) layer.

Examples of the thermoplastic resin used in the thermoplastic resin (B) layer include olefin homopolymers and copolymers such as polyethylenes such as linear low-density polyethylenes, low-density polyethylenes, very-low-density polyethylenes, medium-density polyethylenes, and high-density polyethylenes, ethylene-vinyl acetate copolymers, ionomers, ethylenepropylene (block or random) copolymers, ethylene-(meth)acrylic acid copolymers, ethylene-(meth)acrylic acid ester copolymers, polypropylenes, propylene-α-olefin copolymers, polybutenes, and polypentenes, and polyolefins obtained by graft-modifying these olefin polymers with an unsaturated carboxylic acid or ester thereof; polyesters; polyamides (including copolymerized polyamides); polyvinyl chlorides; polyvinylidene chlorides; acrylic resins; polystyrenes; polyvinyl esters; polyester elastomers; polyurethane elastomers; chlorinated polystyrenes; chlorinated polypropylene; aromatic and aliphatic polyketones, and polyalcohols obtained by reducing these polyketones; polyacetal; and polycarbonates. Among these, polyolefins are preferred, and polypropylenes and polyethylenes are more preferred, in terms of heat sealability and mechanical properties. These can be used alone or in combination of two or more.

The content of the thermoplastic resin in the thermoplastic resin (B) layer is not limited, but it is preferable that the thermoplastic resin is a main component (that is, the content of the thermoplastic resin in the thermoplastic resin (B) layer is 50 mass% or more). The content of the thermoplastic resin is more preferably 60 mass% or more, even more preferably 70 mass% or more, and particularly preferably 80 mass% or more, 90 mass% or more, 95 mass% or more, and 100 mass%.

The melt flow rate (MFR at 190°C with a load of 2160 g as measured in conformity with JIS K 7210:2014) of the thermoplastic resin that constitutes the thermoplastic resin (B) layer is not limited but is preferably 0.10 to 10.0 g/10 minutes and more preferably 0.30 to 5.0 g/10 minutes. When the MFR of the thermoplastic resin that constitutes the thermoplastic resin (B) layer is in the above range, molding stability tends to be better.

The thickness of the thermoplastic resin (B) layer is not limited but is preferably 7 to 100 µm and more preferably 10 to 50 µm in terms of industrial productivity and mechanical properties. It is noted that the above preferable thickness of the thermoplastic resin (B) layer means the thickness after stretching. One or more thermoplastic resin (B) layers may be provided. When a plurality of thermoplastic resin (B) layers is provided, it is preferable that the total thickness is in the above range.

### [Adhesive Resin (C) Layer]

The uniaxially stretched multilayer structure of the present disclosure may have an adhesive resin (C) layer. When the adhesive resin (C) layer is provided, the appearance properties (film surface) of the uniaxially stretched multilayer structure tend to be better.

An adhesive resin that constitutes the adhesive resin (C) layer is not limited, but it is preferable to use a polyolefin having a carboxy group, a carboxylic anhydride group, or an epoxy group, and it is more preferable to use a polyolefin having a carboxylic anhydride group. Such an adhesive resin tends to have excellent adhesiveness to the resin composition (A) layer or the thermoplastic resin (B) layer.

Examples of the polyolefin having a carboxy group include polyolefins obtained by copolymerizing acrylic acid or methacrylic acid. In this case, as typified by ionomers, all or part of carboxy groups contained in the polyolefin may be present in the form of metal salt. Examples of the polyolefin having a carboxylic anhydride group include polyolefins graft-modified with maleic anhydride or itaconic acid. Examples of the polyolefin having an epoxy group include polyolefins obtained by copolymerizing glycidyl methacrylate. Among these, a polyolefin having a carboxylic anhydride group, such as maleic anhydride, can be preferably used, and a polyethylene having a carboxylic anhydride group can be particularly preferably used. These can be used alone or in combination of two or more.

The content of the adhesive resin in the adhesive resin (C) layer is not limited, but it is preferable that the adhesive resin is a main component (that is, the content of the adhesive resin in the adhesive resin (C) layer is 50 mass% or more). The content of the adhesive resin is more preferably 60 mass% or more, even more preferably 70 mass% or more, and particularly preferably 80 mass% or more, 90 mass% or more, 95 mass% or more, and 100 mass%.

The melt flow rate (MFR at 190°C with a load of 2160 g as measured in conformity with JIS K 7210:2014) of the adhesive resin that constitutes the adhesive resin (C) layer is not limited but is preferably 0.1 to 20.0 g/10 minutes and more preferably 1.0 to 10.0 g/10 minutes. When the MFR of the adhesive resin (C) is in the above range, molding stability tends to be better.

The thickness of the adhesive resin (C) layer is not limited but is preferably 0.5 to 20 µm and more preferably 1 to 10 µm in terms of industrial productivity and quality stability. It is noted that the above preferable thickness of the adhesive resin (C) layer means the thickness after stretching. When the uniaxially stretched multilayer structure of the present disclosure has a plurality of resin composition (A) layers and thermoplastic resin (B) layers, the adhesive resin (C) layer may be provided between individual layers, and the number of adhesive resin (C) layers in the uniaxially stretched multilayer structure of the present disclosure is not limited.

### [Uniaxially Stretched Multilayer Structure]

The uniaxially stretched multilayer structure of the present disclosure may have any layered configuration as long as the resin composition (A) layer is provided in a layer other than an outermost layer. Except for this, the layered configuration is not limited. Since the resin composition (A) layer is provided in a layer other than an outermost layer of the uniaxially stretched multilayer structure, a uniaxially stretched multilayer structure with excellent transparency can be obtained. If the resin composition (A) layer is provided in the outermost layer, appearance defects tend to occur resulting in poor moldability, curling tends to occur resulting in poor handleability, and high metal adhesiveness of EVOH leads to poor viscosity/flowability resulting in poor stability in film thickness. For example, an exemplary layered configuration of the uniaxially stretched multilayer structure is as follows. The resin composition (A) layer is denoted as "(A) layer," the thermoplastic resin (B) layer is denoted as "(B) layer," and the adhesive resin (C) layer is denoted as "(C) layer." In the following exemplary configuration, the thermoplastic resin (B) layer and the adhesive resin (C) layer are illustrated as other layers other than the resin composition (A) layer. However, layers other than the resin composition (A) layer are not limited to these layers. It is preferable that a layer that contains polyamide as a main component (that is, the polyamide content in the layer is 50 mass% or more) is not included. It is noted that "1" means that layers on both sides of "/" are directly laminated. An example of the layered configuration of the uniaxially stretched multilayer structure of the present disclosure is (B) layer/(A) layer/(B) layer, (B) layer/(C) layer/(A) layer/(B) layer, (B) layer/(C) layer/(A) layer/(C) layer!(B) layer, (B) layer/(A) layer/(B) layer/(A) layer/(B) layer, (B) layer/(B) layer/(C) layer/(A) layer/(C) layer/(B) layer/(B) layer.

The entire thickness of the uniaxially stretched multilayer structure of the present disclosure is not limited and can be set as appropriate according to the intended use. The entire thickness is preferably 10 µm or more and more preferably 15 µm or more. When the entire thickness is 10 µm or more, industrial productivity and mechanical properties tend to be more improved. Further, the entire thickness is preferably 100 µm or less and more preferably 50 µm or less. When the entire thickness is 100 µm or less, industrial productivity and cost efficiency tend to be more improved. It is noted that the above preferable entire thickness of the uniaxially stretched multilayer structure means the thickness after stretching.

The internal haze of the uniaxially stretched multilayer structure of the present disclosure is preferably less than 0.4%, more preferably 0.3% or less, and particularly preferably 0.2% or less, and 0%. The haze measurement can be made on the multilayer structure with a film thickness of 33 µm by using a haze meter in accordance with ASTM D1003.

The method of producing the uniaxially stretched multilayer structure of the present disclosure is not limited. Typically, a conventional coextrusion method can be used, in which respective resins are extruded from individual dies or a common die and laminated. For example, an annular die or a T-die can be used as the die. Examples of the molding method include extrusion molding, blow molding, injection molding, thermoforming, cast molding, and inflation molding.

The method of producing the uniaxially stretched multilayer structure of the present disclosure is, for example, the following method including steps (1) and (2). Step (1): melting and extruding the resin composition (A) and the thermoplastic resin (B) to mold a multilayer structure intermediate in which the resin composition (A) layer is provided in a layer other than an outermost layer, and step (2): stretching the multilayer structure intermediate molded in step (1) in a uniaxial direction to produce a uniaxially stretched multilayer structure. It is noted that step (1) may be a step of melting and extruding the resin composition (A), the thermoplastic resin (B), and the adhesive resin (C) to mold a multilayer structure intermediate. When the multilayer structure intermediate molded in step (1) is cylindrical, the method may further include, in addition to the above steps (1) and (2), a step of cutting at least a part of the cylindrical multilayer structure to obtain a planar multilayer structure.

It is noted that the multilayer structure intermediate in the present disclosure refers to a multilayer structure before being stretched in a uniaxial direction.

The uniaxially stretched multilayer structure of the present disclosure is stretched in a uniaxial direction. The stretch ratio is not limited, but the stretch ratio of 3 to 12 is preferred. If the stretching of the multilayer structure of the present disclosure is less than three times, thickness variations tend to be caused by stretching, or gas barrier properties tend to be reduced. On the other hand, if the stretching of the multilayer structure of the present disclosure exceeds 12 times, the film surface after stretching tends to be deteriorated. The uniaxially stretched multilayer structure of the present disclosure is preferably stretched in a uniaxial direction four or more times and more preferably stretched five or more times. Further, the uniaxially stretched multilayer structure of the present disclosure is preferably stretched in a uniaxial direction 10 or less times and more preferably stretched eight or less times. It is advantageous that the uniaxially stretched multilayer structure of the present disclosure is stretched in a uniaxial direction, in terms of cost efficiency and in that the multilayer structure is easily torn (when it is used as a package, the package is easy to open) and that the gas barrier properties are improved. Further, the stretching direction of the uniaxially stretched multilayer structure is not limited and may be either the longitudinal direction (MD direction) or the width direction (TD direction). Uniaxial stretching in the longitudinal direction (MD direction) is preferred. It is preferable that the multilayer structure is substantially not stretched in a direction different from the stretching direction.

The stretch state (unstretched, uniaxially stretched, biaxially stretched, etc.) of the multilayer structure can be determined by using a common method for analyzing the orientation of resins (for example, wide-angle X-ray scattering (WAXS)).

The stretching method of the uniaxially stretched multilayer structure of the present disclosure is not limited. Exemplary methods include tenter stretching method, tubular stretching method, and roll stretching method. In terms of production costs, uniaxial stretching by a roll stretching method is preferred. Further, when the multilayer structure of the present disclosure is an inflation-molded product, a roll stretching method is preferred.

The stretching temperature in stretching the multilayer structure is not limited. Typically, the temperature range of 50 to 130°C is employed.

### [Use of Uniaxially Stretched Multilayer Structure]

The uniaxially stretched multilayer structure of the present disclosure can be suitably used as a packaging material for various packaging material containers and packaging films for general foods, condiments such as mayonnaise and dressing, fermented foods such as miso, fat and oil foods such as salad oil, snacks, beverages, cosmetics, and pharmaceutical products, or as parts of these multilayer structures.

### EXAMPLES

Specific modes of the present disclosure will be described more specifically below using examples. However, it should be understood that the present disclosure is not limited to the following examples within the scope of the present disclosure. It is noted that the values of various production conditions and evaluation results in the following examples mean preferred values of upper limits or lower limits in embodiments of the present disclosure, and a preferred range may be a range defined by a combination of the above upper or lower limit value and any value in the following examples or values of the examples.

The materials used in the following examples, comparative examples, and reference examples are as follows.

### <EVOH>

- EVOH (A-1): ethylene unit content 29 mol%, MFR (at 210°C with a load of 2.16 kg): 3.8 g/10 minutes, density: 1.21 g/cm³, saponification degree 99.9 mol%
- EVOH (A-2): ethylene unit content 25 mol%, MFR (at 210°C with a load of 2.16 kg): 4.0 g/10 minutes, density: 1.22 g/cm³, saponification degree 99.9 mol%
- EVOH (A-3): ethylene unit content 32 mol%, MFR (at 210°C with a load of 2.16 kg): 3.8 g/10 minutes, density: 1.19 g/cm³, saponification degree 99.9 mol%
- EVOH (A-4): ethylene unit content 38 mol%, MFR (at 210°C with a load of 2.16 kg): 4.0 g/10 minutes, density: 1.17 g/cm³, saponification degree 99.9 mol%

### <Thermoplastic Resin>

- Polyethylene (B): "NOVATEC (registered trademark) HY540" available from Mitsubishi Chemical Corporation, MFR (at 190°C with a load of 2.16 kg): 1.0 g/10 minutes

### <Adhesive Resin>

- Acid-modified polyethylene resin (C): "Modic (registered trademark) M545" available from Mitsubishi Chemical Corporation, MFR (at 190°C with a load of 2.16 kg): 6.0 g110 minutes

### [Production of Uniaxially Stretched Multilayer Structure]

(A-1), (B), and (C) were fed to a multilayer cast film line (available from Research Laboratory of Plastics Technology Co., Ltd.) to produce a 3-type 5-layer multilayer structure intermediate of (B) layer/(C) layer/(A-1) layer/(C) layer/(B) layer by multilayer coextrusion molding. The thicknesses (µm) of the layers of the resultant multilayer structure intermediate were 80/10/20/10/80.

Subsequently, the resultant multilayer structure intermediate was fed to a stretcher (available from MEC Techno Co., Ltd.) and passed through between a roll heated to a surface temperature (stretching temperature) of 120°C and another roll rotated at a different speed to be stretched in the longitudinal direction (MD direction) six times, resulting in a uniaxially stretched multilayer structure. The thicknesses (µm) of the layers of the resultant uniaxially stretched multilayer structure were 13.311.613.311.6113.3.

### (Multilayer Coextrusion Molding Conditions)

- (A-1) layer: 40-mm diameter single screw extruder (barrel temperature: 210°C)
- (B) layer: 40-mm diameter single screw extruder (barrel temperature: 230°C)
- (C) layer: 32-mm diameter single screw extruder (barrel temperature: 200°C)
- Die: 4-type 5-layer feed block T-die (die temperature: 230°C)
- Take-up speed: 4 m/minute

### <Examples 2 to 5, Comparative Examples 1 and 2>

Uniaxially stretched multilayer structures were produced in the same way as in Example 1 except that the kinds of EVOH and the stretching conditions were as listed in Table 1.

### <Reference Example 1>

A uniaxially stretched multilayer structure was produced in the same way as in Example 1 except that a tenter-type biaxial stretching machine (available from Brukner Group) was used and the stretching conditions were as listed in Table 1. It is noted that the ratio "2×3" in the stretching conditions listed in Table 1 means stretching two times in the MD direction, three times in the TD direction, and six times in total.

The stretchability of the multilayer structure intermediates of Examples 1 to 5, Comparative Examples 1 and 2, and Reference Example 1, and the internal haze of the uniaxially stretched multilayer structures, were evaluated by the following methods. The results are listed in Table 1.

### [Evaluation Method]

### (Stretchability)

The uniaxially stretched multilayer structures (300 mm length, 210 mm width) produced above were visually checked as to whether they had any hole. A case with any hole was evaluated as poor, and a case with no hole was evaluated as good.

### (Transparency: Internal Haze)

The internal haze of each of the uniaxially stretched multilayer structures produced above with a film thickness of 33 µm was measured by using a haze meter in accordance with ASTM D1003, and the average value was calculated, where n=3. The internal haze is an index to evaluate the degree of cloudiness. The smaller internal haze indicates that the transparency of the uniaxially stretched multilayer structure is better.

**Table 1**

| | EVOH | Stretching conditions | | | Evaluation | |
|---|---|---|---|---|---|---|
| | | Method | Temperature (°C) | Ratio | Stretchability | Transparency (%) |
| Example 1 | A-1 | Uniaxial | 120 | 6 | Good | 0 |
| Example 2 | A-2 | Uniaxial | 120 | 6 | Good | 0.2 |
| Example 3 | A-1 | Uniaxial | 120 | 7 | Good | 0.2 |
| Example 4 | A-1 | Uniaxial | 120 | 8 | Good | 0.1 |
| Example 5 | A-1 | Uniaxial | 130 | 7 | Good | 0.2 |
| Comparative Example 1 | A-3 | Uniaxial | 120 | 6 | Good | 0.4 |
| Comparative Example 2 | A-4 | Uniaxial | 120 | 6 | Good | 0.5 |
| Reference Example 1 | A-1 | Biaxial | 120 | 2×3 | Poor | Unmeasurable |

Examples 1 to 5 demonstrated that using EVOH with an ethylene unit content of less than 32 mol% provides the uniaxially stretched multilayer structure with excellent transparency, as compared to Comparative Examples 1 and 2 using EVOH with an ethylene unit content of 32 mol% or more. Further, when EVOH with an ethylene unit content of less than 32 mol% was used in biaxial stretching, holes were produced and stretching was failed (Reference Example 1). Accordingly, it can be understood that the effects of the present disclosure achieved by using EVOH with an ethylene unit content of less than 32 mol% is unique to uniaxially stretched multilayer structures.

EVOH with a low ethylene unit content provided excellent transparency, presumably because its melting point tends to be high as compared to EVOH with a high ethylene unit content, and this facilitates stretching orientation and makes the molecular arrangement well-organized. On the other hand, EVOH with a high ethylene unit content resulted in poor transparency, presumably because it is difficult to apply stretching orientation and also difficult to make the molecular arrangement well-organized,

While specific forms of the embodiments of the present disclosure have been shown in the above examples, the examples are merely illustrative but not limitative. It is contemplated that various modifications apparent to those skilled in the art could be made within the scope of the present disclosure.

## Claims

1. A multilayer structure having layers stretched in a uniaxial direction, comprising a resin composition (A) layer containing an ethylene-vinyl alcohol copolymer, wherein
the ethylene-vinyl alcohol copolymer in the resin composition (A) layer has an ethylene unit content of less than 32 mol%, and
the resin composition (A) layer is provided in a layer other than an outermost layer of the multilayer structure.

2. The multilayer structure according to claim 1, wherein the multilayer structure is stretched in a uniaxial direction 3 to 12 times.

3. The multilayer structure according to claim 1 or 2, wherein the resin composition (A) contains an ethylene-vinyl alcohol copolymer as a main component.

4. The multilayer structure according to any one of claims 1 to 3, further comprising a thermoplastic resin (B) layer.

5. The multilayer structure according to any one of claims 1 to 4, further comprising an adhesive resin (C) layer.

6. The multilayer structure according to any one of claims 1 to 5, wherein the multilayer structure does not include a layer containing polyamide as a main component.

7. A method of producing a multilayer structure according to any one of claims 1 to 6, comprising:
melting and extruding a resin composition (A) and a thermoplastic resin (B) to mold a multilayer structure intermediate in which the resin composition (A) layer is provided in a layer other than an outermost layer; and
stretching the multilayer structure intermediate in a uniaxial direction to produce a uniaxially stretched multilayer structure.

8. The method of producing a multilayer structure according to claim 7, wherein the melting and extruding includes melting and extruding the resin composition (A), the thermoplastic resin (B), and an adhesive resin (C) to mold the multilayer structure intermediate.
